# EUROPEAN PATENT APPLICATION

(11) **EP 2 169 495 A1**
(43) Date of publication of application: **31.03.2010**
(21) Application number: 08016427.0
(22) Date of filing: 18.09.2008
(51) Int. Cl.: G05B 19/418, G06Q 10/00

(54) **Method for modelling a manufacturing process**

(71) Applicant: Siemens Aktiengesellschaft, 80333 München (DE)
(72) Inventor: Fontanot, Paolo, 34074 Monfalcone (IT)
(74) Representative: Fischer, Michael

(57) **Abstract**

The present invention discloses a method for modelling a manufacturing process, the modelling being performed by both a business layer and an execution layer, comprising the steps of defining a generic equipment class (1) containing at least a first placeholder, defining at least one generic process segment class (2) associated with the generic equipment class (1) and containing at least a second placeholder, defining at least one specific equipment sub class (3a) derived from the generic equipment class (1), defining at least one specific process segment sub class (3b) derived from the generic process segment class (2), the specific process segment sub class (3b) being associated with the specific equipment sub class (3a) and modelling the manufacturing process by using the first and second placeholder on the business layer.

This method now offers the opportunity that the business layer is responsible of planning decisions at the level of the placeholders representing the generic classes of equipment and process segments. The execution layer is responsible of scheduling decisions at the level of the specific sub classes of equipment and process segments. An automation logic in this layer can use the information about the association between a specific process segment sub class and a specific equipment sub class to instantiate for scheduling and execution the appropriate specific process segment on the chosen specific equipment.

## Description

The invention relates to a method for modelling a manufacturing process, especially in a production employing a computer managed manufacturing execution system.

Supervision and control of production activities by means of computer systems require an accurate description of the manufacturing environment where these activities take place. Computers systems are used to manage the manufacturing business, to schedule the production activities and to coordinate the execution of the operations according to this production schedule. A production schedule fulfilling a production request is built on a basis of a detailed model of the processes (which are made of interrelated activities between individual production steps) and of the resources involved, like equipment, materials, tools and personnel. An accurate modelling of the manufacturing process is essential for both scheduling and execution and to eventually achieve a good level of operational performance.

Another factor qualifying the performance level of a manufacturing process is flexibility. Many modern manufacturing environments are flexible since they offer different alternative ways to perform the same type of operation. For example, multiple, alternative "routes" are possible to make the same product and/or flexible working cells equipped with robots or numerical control machines programmed to perform similar operations are present within the shop floor.

However, a majority of computer logic used to describe and execute the production schedule is more rigid since the model representing all possible operations does not allow the said flexibility. This is because the model of the processes that is used to build the production schedule and drive the production execution is required to know exactly and in advance how each operation has to be performed.

The flexibility of a model for representing production activities is based on its ability to describe all the possible production alternatives for fulfilling a production request:
for example the same product can be produced in different ways by choosing alternative routes to make it and for each production step within a given route different alternative resources can be chosen to perform the related operation. Many of the models have more than one way to represent production alternatives. However, even in this case, the choice of each specific alternative to be used has to be done in advance, before dispatching the operations to the shop floor. Moreover, since for each specific product every possible alternative choice has to be represented inside the model itself of the processes, a great number of said alternatives have to be taken in account even if many of the alternatives differ very slightly among the others.

This requires big efforts to build and maintain such a production model up to date. A major drawback of known methods for modelling the production alternatives is that there is no clear decoupling between a business layer, the business layer concerning the production requests like production orders and operations, and an execution layer responsible for a performing of production steps.

This drawback reduces the flexibility of the production schedule itself. Thus, a lack of flexibility in the modelling of the manufacturing process comes together with a failure to differentiate between the alternative choices requiring human decision and responsibility, like make-or-buy choices, and operational choices, typically a routing and a choice of the alternative equipment, whereby the operational choices present a large potential for an automatic performance without involving business decisions. To illustrate these circumstance, an example 1 is discussed hereinafter:

### Example 1

It is supposed for this example 1 that three main choices "A", "B" and "C" are available to produce the product XYZ:
- A) To use one of the following automatic machines:
   "a001", "a002", "a003". This is the preferred choice.
      The last two machines require just one production step to produce the finished product XYZ, with the supervision of one not-skilled operator. Machine "a001" is an older model, requiring two production steps and two operators.
- B) To make it using one of the two semiautomatic machines "b001" and "b002". Both of them require two production steps to make the product XYZ and need the supervision of a skilled operator.
- C) To buy the required amount of the XYZ product from an external supplier.

The choice between the alternatives "A", "B" or "C" clearly involves a business decision. Once a choice at this level of responsibility has been made, the following choice (i.e. whether to use the machine "a001", "a002" or "a003" if the "A" alternative has been chosen) requires only an operational decision of a lower level of responsibility.

Typically, the methods used for modelling the manufacturing processes lack in providing a way to clearly distinguish between production alternatives requiring different levels of responsibility. In general, a typical model for the manufacturing process provides ways for describing on one hand a production plant made of areas, work centres, cells, units, etc., the production plant containing equipment where the operations are performed and on the other hand tasks which have to be done in order to manufacture a specific product. Every product in a typical model for the manufacturing process is associated with details of required activities of product-specific resources to be used and with detailed product-specific parameter values which are fed into the manufacturing process itself when the specific product is manufactured.

A well known example of a model for manufacturing is found in a standard called ISA S95. The standard ISA S95 is an extension by a batch mode of the ISA S88 standard for process control engineering in manufacturing, applicable for discrete and continual production types. It defines schemes for the individual production steps, the schemes containing rules about information exchange between different production phases required in the manufacturing execution system like: an equipment scheme, a maintenance scheme, the production schedule, etc.

In order to put into practice the concepts defined in the ISA S95 standard, an XML implementation, known as B2MML, of the ISA 95 family of standards, known internationally as IEC/ISO 62264 has been provided. B2MML consists of a set of XML schemas written using the World Wide Web Consortium's XML Schema language (XSD) that implement the data models in the ISA S95 standard. B2MML is used to integrate business systems and supply chain management systems with manufacturing systems such as control systems and the manufacturing execution systems. B2MML is a complete implementation of the ISA S95.

In ISA S95, a plant model is described, containing a description of an equipment hierarchy, whereby the equipment is involved in performing process segments requiring resources that will be used in product specific product production rules. Product segments correspond to the product production rules, whereby process segments are associated to the product segments. The product segments require product-specific resources with the detailed product-specific parameter values. The process segment concept is used to model a workflow, in other words the production steps, required to perform a given operation. The product segment is used to further characterize the process segment for the specific product with product-specific information. The required resources are described by means of resource specifications (for equipment, material and personnel) associated to process and product segments.

The production alternatives are modelled at three different levels:

### I. Alternative choices of resources:

Each resource specification, for example for the material, the equipment, the personnel belonging to the product segment in the product production rule can contain a list of the alternative choices for the resource.

### II. Alternative product segments:

Within the product production rule, a same activity can be represented by a number of the product segments, however only one of the product segments will be chosen before dispatching the activity to the shop floor.

### III. Alternative product production rules:

To manufacture the product, a number of the product production rules can be defined, however only one of the product production rules will be chosen before scheduling and dispatching the operations to the shop floor in order to fulfil the production request for the product.

Although this way of modelling the alternative production choices is widely used in the computer managed manufacturing execution systems it shows following limitations:
i. Each of the choices I for the alternative equipment is forced to maintain a same product and process segment structure: in this way it is impossible to model a scenario whereby different equipment capable of performing the same kind of operation can require different resources and even different process segment structures with different workflows of production steps.
ii. An only way to model for the product an alternative production routing related to equipment having different behaviour as mentioned in I is to either define the product segments as stated in II or to provide the product production rules as mentioned in III. This results in a high modelling effort due to a proliferation of modelling information for each of a variety of products. This also means that, due to a lack of decoupling between modelling information related to the business and to the execution layer, operational choices related only to a choice of the equipment require decisions, for example to choose a different product segment or product production rule for the production request, that usually are under a responsibility of the business level itself.
iii. Usually only the alternative choices of the resources imply an operational choice that is automatically managed without human intervention, for example a scheduling algorithm. Because of a direct connection of the execution layer with the business layer as mentioned in ii, both of the alternative choices of resources and the alternative product segments require a high level of responsibility that is usually only managed by human decisions.

### Example 2

According to the ISA S95 model, the example 1 for the making of the product XYZ can be represented as follows:
- a) A product-production-rule "XYZ-A" related to the choice "A" of making the required product using an automatic machine. In this case two alternative product segments are provided: one "xyz-a.1." for the oldest machine "a001" and one "xyz-a.2" with the possibility to choose one of the newest machine "a002" and "a003". By modelling two distinct product segments for the older and the newer machines it makes it possible to describe the fact that the two operators are required for the older and just one for the newest ones.
- b) A product-production-rule "XYZ-B" related to the choice "B" of making the required product using a semiautomatic machine. In this case just one product segment "xyz-b" is provided for the making of XYZ with the posssibilty to choose between the machines "b001" and "b002".
- c) A product-production-rule "XYZ-C" related to the choice "C" of buying the required product from an external supplier.

In a structure of the production schedule as specified by the ISA S95, a way the production request is fulfilled is strictly related to the product production rule and to the product segment structure used. A change in the structure of the production schedule in order to follow one of the alternative choices directly affects a way the business layer views the operations in the production schedule itself.

In the above example 2 the limitation expressed in (ii) is explained by the fact that under the given "A" alternative of production rule, two different alternative product segments "xyz-a.1" and xyz-a.2" are required to model the fact that different types of automatic equipment are capable to perform the making of the product XYZ. This exposes to the business level the necessity to model and to choose between alternatives (the two product segments) that in fact, once the choice between "A", "B" or "C" has been done at the business level, are only related to an operational decision: the further choice of which machine has to be used to fulfill the operations.

It is therefore the goal of the present invention to provide a method for modelling a manufacturing process, the modelling being especially capable of integrating the alternative choices associated with the production request without affecting the entire manufacturing process and capable of reducing the efforts to build and to maintain the production model up to date.

This goal is achieved according to the present invention by a method for modelling a manufacturing process, the modelling involving both a business layer and an execution layer, comprising the steps of:
a) defining a generic equipment class containing at least a first placeholder,
b) defining at least one generic process segment class associated with the generic equipment class and containing at least a second placeholder,
c) defining at least one specific equipment sub class derived from the generic equipment class,
d) defining at least one specific process segment sub class derived from the generic process segment class, the specific process segment sub class being associated with the specific equipment sub class; and
e) modelling the manufacturing process by using the first and second placeholder on the business layer.

This method now offers the opportunity that the business layer is responsible of planning decisions at the level of the placeholders representing the generic classes of equipment and process segments. The execution layer is responsible of scheduling decisions at the level of the specific sub classes of equipment and process segments. An automation logic in this layer can use the information about the association between a specific process segment sub class and a specific equipment sub class to instantiate for scheduling and execution the appropriate specific process segment on the chosen specific equipment.

The main advantage of the present invention is an increased flexibility in the modelling of the manufacturing process, giving an ability to deeply describe details of the alternative choices within the model of processes involved in the manufacturing process. The present invention further makes it possible to control a production flow which automatically adapts to various production environment conditions by choosing between different ways of performing the same operation. Especially, the control of the production flow occurs in one of two ways: without human supervision and/or intervention, with human supervision and/or intervention. In any of the two ways, a reconfiguration of all details about the parameter values and the resources required by the alternative production choices is obsolete. Furthermore, a clear distinction between the business and the execution layer is reached.

Features and advantages of the present invention will become more apparent from the following detailed description of a preferred example of the present invention in conjunction with the following figures, whereby the drawings depict in:
- Figure 1: Example of modelling a manufacturing process;
- Figure 2: Example for an application to factory automation;

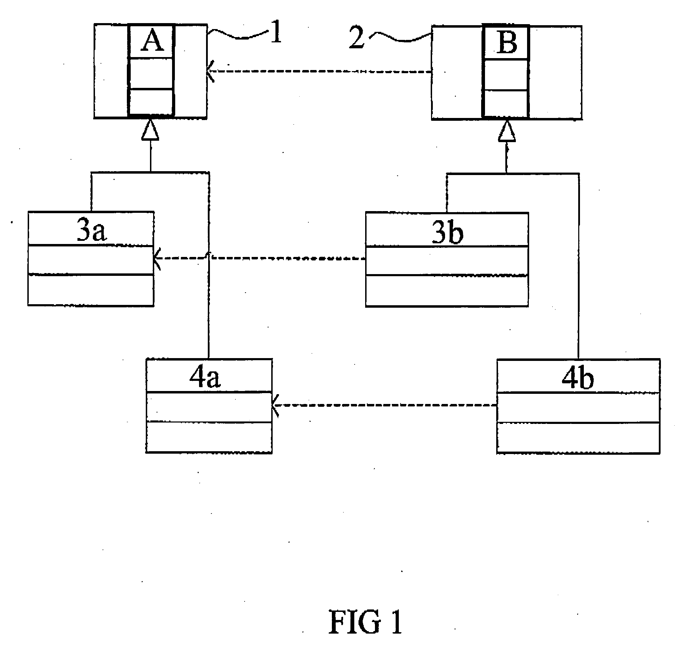

Figure 1 shows an example of modelling a manufacturing process according to the present invention. The dotted lines represent an association between two entities and the full lines represent an inheritance of properties of one entity to another entity. A generic process segment class 2 is associated to a generic equipment class 1. A first specific equipment sub class 3a and a second specific equipment sub class 4a inherit a set of equipment data A from the generic equipment class 1. A first specific process segment sub class 3b and a second specific process segment sub class 4b inherit a set of process data B from the generic process segment class 2. The first specific process segment sub class 3b is associated to the first specific equipment sub class 3a and the second specific process segment sub class 4b is associated to the second specific equipment sub class 4a.

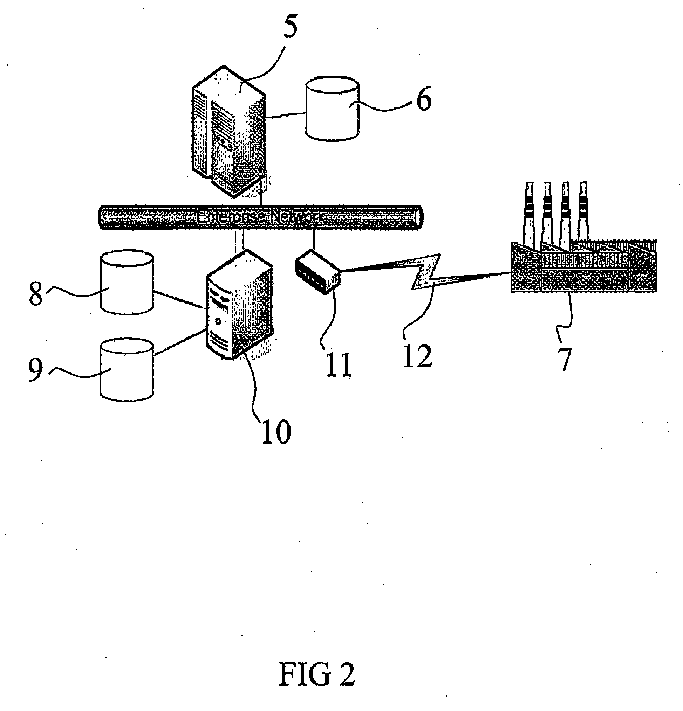

Figure 2 shows an example for an application to factory automation. An enterprise resource planning (ERP) system 5 communicates via an enterprise network with a production scheduler 10. The ERP 5 is connected to a first database 6 containing production requests. A production scheduler 10 is connected to a second database 8 containing a production model and to a third database 9 containing a production schedule. An automation system 11 communicates with the production scheduler 10 via the enterprise network and controls a production in a factory 7 by transmitting production data and commands via a data exchange interface 12. The production model is implemented according to the present invention and contains a description of all available equipments of the factory 7. The production scheduler 10 selects and assigns to production equipments suitable for manufacturing the product according to the production schedule. It interacts with the automation system 11 in order to schedule the production and in order to adjust the production by selecting alternative equipment in case of a failure or in case of an unavailability of a previously selected equipment.

The first placeholder is replaced with an equipment parameter describing a superordinate equipment, the equipment parameter being selectable in the business layer and the second placeholder is replaced with a production request parameter which is selectable in the business layer. The generic equipment class 1 and the generic process segment class 2 are used as means to provide an interface for manufacturing process modelling for a business level side, by allowing a definition of the superordinate equipment and of the production request parameter by the business layer. For example, the business level may have a choice of manufacturing the product on different sites, or on different units of one site. There may be certain requirements regarding financial aspects of the production and the business layer may decide to trigger the production on one of the different sites because a main target area to sell the product is located close to the chosen site. In this way, costs of product shipping are reduced. The business layer replaces the first placeholder with information regarding the chosen site. Furthermore, a certain volume of production is required and there is a marketing timeframe for an availability of the product. Thus, the second placeholder is replaced with this information. The provision of the first and of the second placeholder advantageously allows the method to be reusable for all possible manufacturing scenarios and provide all required custom information from a point of view of the business layer.

The specific equipment sub class 3a inherits a set of equipment data A from the generic equipment class 1 and the specific process segment sub class 3b inherits a set of process data B from the generic process segment class 2. Following the example mentioned above, the required information, thus the set of equipment data A and the set of process data B, specified by the business layer is inherited to the specific equipment sub class 3a and to the specific process segment sub class 3b. This advantageously allows the execution layer to adapt manufacturing of the product to the required information in an automatized way. Thus, the execution layer is able to take into account, before starting the production, all production capabilities of the chosen site in order to account for the volume of production and to the marketing timeframe.

The specific equipment sub class 3a describes a subordinate equipment, the subordinate equipment being selectable in the execution layer and the specific process segment sub class 3b describes a totality of production parameters which are selectable in the execution layer. The subordinate equipment is defined as a component of the superordinate equipment. Knowing where the product has to be manufactured, the execution layer is able to determine and define a specific equipment to be used for the production and equally alternative choices for the specific equipment. Having defined the specific equipment, a refinement of the modelling process is carried out by the execution layer, consisting in defining all of the required production parameters needed for each of the production steps. All of the capabilities of the chosen site are taken into account by configuring an own specific equipment sub class for each possible option. Advantageously, this provides an ample set of information concerning backup solutions. Furthermore, there is no need for the business layer to have specialized knowledge of the chosen site. For the execution layer it is one-time effort to input information concerning all the capabilities of the chosen site, thus the alternative choices, into a database.

A specific equipment is chosen by an automation logic out of a range of alternative specific equipments. Advantageously, the required information is gathered by the automation logic, which chooses and configures the specific equipment without a necessity of human intervention.

The automation logic performs a reassignment of equipment out of the range of alternative specific equipments in one of two cases: failure of the specific equipment, unavailability of the specific equipment. If any problems with the specific equipment, the logic is able to automatically redirect the production steps to one of the alternative choices or reallocate the production to a different equipment within the chosen site. This advantageously raises a level of effectiveness by reacting to the problem in a fast and optimized way. A need to revise decisions by the business layer, due to a production redirection, is thus eliminated.

A preferred embodiment of the present invention comprises a user interface and a production scheduler 10 connected to an ERP system 5 and an automation system 11 by means of a data exchange interface 12. The production requests coming from the ERP system 5 are detailed at business level only and are used by the execution layer to build the detailed production schedule within the embodiment, adding production details and specific information related to the specific equipment. The embodiment interacts with the automation system 11 which actually controls the production process. Advantageously, in case of the failure or of the unavailability of the specific equipment, in other words in case of any unexpected condition, the automation algorithm is able to quickly switch, for a same business-level production request, from one type of production process to another by means of an alternative specific equipment.

### List of Abbreviations

- 1: = generic equipment class
- 2: = generic process segment class
- 3a: = first specific equipment sub class
- 4a: = second specific equipment sub class
- 3b: = first specific process segment sub class
- 4b: = second specific process segment sub class
- 5: = enterprise resource planning system
- 6: = first database
- 7: = factory
- 8: = second database
- 9: = third database
- 10: = production scheduler
- 11: = automation system
- 12: = data exchange interface
- A: = set of equipment data
- B: = set of process data

## Claims

1. Method for modelling a manufacturing process, the modelling being performed by both a business layer and an execution layer, comprising the steps of:
a) defining a generic equipment class (1) containing at least a first placeholder,
b) defining at least one generic process segment class (2) associated with the generic equipment class (1) and containing at least a second placeholder,
c) defining at least one specific equipment sub class (3a) derived from the generic equipment class (1),
d) defining at least one specific process segment sub class (3b) derived from the generic process segment class (2), the specific process segment sub class (3b) being associated with a specific equipment sub class (3a); and
e) modelling the manufacturing process by using the first and second placeholder on the business layer.

2. Method according to claim 1, whereby the first placeholder is replaced with an equipment parameter describing a superordinate equipment, the equipment parameter being selectable in the business layer.

3. Method according to claims 1 or 2, whereby the second placeholder is replaced with a production request parameter which is selectable in the business layer.

4. Method according to one of the preceding claims, whereby the specific equipment sub class (3a) inherits a set of equipment data (A) from the generic equipment class (1).

5. Method according to one of the preceding claims, whereby the specific process segment sub class (3b) inherits a set of process data (B) from the generic process segment class (2).

6. Method according to one of the preceding claims, whereby the specific equipment sub class (3a) describes a subordinate equipment, the subordinate equipment being selectable in the execution layer.

7. Method according to one of the preceding claims, whereby the specific process segment sub class (3b) describes a totality of production parameters which are selectable in the execution layer.

8. Method according to one of the preceding claims, whereby a specific equipment is chosen by an automation logic in the execution layer out of a range of alternative specific equipments.

9. Method according to any of the preceding claims 1 to 8, whereby a specific process segment is chosen by an automation logic in the execution layer, the specific process segment sub class (3b) being the one associated with the specific equipment sub class (3a) of the chosen specific equipment.

10. Method according to claim 8, whereby the automation logic in the execution layer performs a reassignment of equipment out of the range of alternative specific equipments in one of two cases: failure of the specific equipment, unavailability of the specific equipment.

11. Module implementing the method according to claims 1 to 10, comprising a user interface and a production scheduler (10) connected to an enterprise resource planning system (5) and to an automation system (11) by means of a data exchange interface (12).
